## Europäisches Patentamt
## European Patent Office
## Office européen des brevets

(11) Publication number: **0 112 151**
**B1**

(12) **EUROPEAN PATENT SPECIFICATION**

(45) Date of publication of patent specification: **20.01.88**

(51) Int. Cl.⁴: **C 01 B 33/04**

(21) Application number: **83307568.2**

(22) Date of filing: **13.12.83**

(54) Process for production of silane.

(30) Priority: **13.12.82 US 449486**

(43) Date of publication of application:
**27.06.84 Bulletin 84/26**

(45) Publication of the grant of the patent:
**20.01.88 Bulletin 88/03**

(84) Designated Contracting States:
**DE FR GB IT NL**

(56) References cited:
**GB-A- 823 496**
**US-A-3 043 664**

**CHEMICAL ABSTRACTS, volume 91, no. 24, December 10, 1979, page 721, abstract 203585w (COLUMBUS, OHIO, US) D.K. PADMA et al. "Silicon tetrafluoride: preparation and reduction with lithium aluminum hydride"**

(73) Proprietor: **ETHYL CORPORATION**
**Ethyl Tower 451 Florida Boulevard**
**Baton Rouge Louisiana 70801 (US)**

(72) Inventor: **Marlett, Everett Michael**
**9355 Greenbriar Drive**
**Baton Rouge Louisiana (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to the production of silane gas (SiH$_4$) and more specifically to a highly advantageous, commercially attractive process for production of silane.

The production of pure silane is an important step in the ultimate production of ultrahigh purity silicon for semiconductor materials and other purposes.

In the past, the art has taught several schemes to synthesize silane from silicon tetrachloride (SiCl$_4$) but these have not proven commercially feasible. Rather, industry has selected various other routes for commercial silane production. For example, one foreign producer reportedly reacts magnesium silicide (Mg$_2$Si) with ammonium chloride (NH$_4$Cl) in liquid ammonia. Another domestic producer reacts silicon tetrachloride with the relatively expensive lithium aluminum tetrahydride (LiAlH$_4$). Another producer obtains various chlorosilanes by hydrochlorination of metallurgical grade silicon and then disproportionates the chlorosilanes in a catalyst bed to silane and silicon tetrachloride. Still other producers avoid silane altogether, instead depositing silicon from chlorosilanes. Thus, there exists a need to provide pure silane by an economical synthesis from readily available starting materials.

British Patent Specification 823,496 discloses the production of silane by reaction of a silicon tetrahalide with an aluminum-containing hydride, for example sodium aluminum hydride in a solvent.

United States Patent 3,043,664 discloses the production of silane by reacting a silicon halide with an alkali metal aluminum hydride in a solvent in the presence of an alkaline earth metal aluminum hydride added to prevent formation in the product of diborane impurity (formed from boron impurity in the reaction mixture).

The present invention is directed to the provision of pure silane gas by an economically feasible route from readily available starting materials.

The present invention is a process for the production of silane wherein silicion tetrafluoride is reacted exclusively with sodium aluminum tetrahydride, potassium aluminum tetrahydride, or a mixture of sodium aluminum tetrahydride and potassium aluminum tetrahydride.

The present invention is also a process wherein the silicon tetrafluoride is introduced into the reaction zone in non-solid form.

The present invention is also a process wherein silicon tetrafluoride is reacted with a specified tetrahydride on a continuous basis in an inert liquid reaction mixture whereby throughout substantially the entire reaction period the reaction mixture comprises a non-viscous slurry of by-product solids in said medium.

The present invention is also the mentioned continuous process wherein the molar ratio of by-product solids to reactant tetrahydride is at least one.

The present invention also involves a process for the production of silane wherein gaseous silicon tetrafluoride is introduced into an inert liquid reaction medium containing sodium aluminum tetrahydride and the reaction medium is maintained at a temperature in the range of from 30 to 80 degrees Centigrade.

In a further embodiment, this invention provides a process for the production of silane which comprises introducing gaseous silicon tetrafluoride into an agitated, inert liquid polyether reaction medium containing sodium aluminum tetrahydride, the reaction mixture being maintained (i) at a temperature in the range of from 30 to 80 degrees Centigrade, (ii) at a pressure in the range of from 101 to 10100 kPa, and (iii) under an atmosphere of hydrogen, silane or both.

A still further embodiment of this invention involves a process for the economical production of high purity silane gas, said process comprising the steps of:

(a) introducing gaseous silicon tetrafluoride into an inert liquid reaction medium containing sodium aluminum tetrahydride for reaction at a temperature in the range of 0 to 150°C to produce high purity silane gas and by-product solids, said liquid reaction medium being further characterized in that said by-product solids are insoluble therein and said by-product solids do not form a stable complex therewith;

(b) recovering high purity silane gas product;

(c) separating said by-product solids from said liquid reaction medium; and

(d) separately recovering said liquid reaction medium and said by-product solids.

In another embodiment of this invention, the foregoing process for the economical production of silane gas is further characterized by being conducted on a continuous basis whereby at least periodically, and preferably continuously, (a) gaseous silicon tetrafluoride and (b) sodium aluminum tetrahydride dissolved in fresh inert liquid reaction medium are separately introduced into the inert liquid reaction medium in the reaction zone, and at least periodically, and preferably continuously, (c) silane gas product and (d) liquid reaction medium containing said by-product solids are withdrawn from the reaction zone.

In accordance with the present invention, pure silane gas is produced from the reaction of silicon tetrafluoride (SiF$_4$) with sodium aluminum tetrahydride (NaAlH$_4$), potassium aluminum tetrahydride (KAlH$_4$), or a mixture of sodium aluminum tetrahydride and potassium aluminum tetrahydride. The preferred reaction is silicon tetrafluoride with sodium aluminum tetrahydride.

Silicon tetrafluoride is readily produced as a gas from fluosilicic acid (H$_2$SiF$_6$), a by-product of the phosphate fertilizer industry and also available from other sources. Silicon tetrafluoride offers several advantages over silicon tetrachloride. For example, the fluoride by-products obtained from reaction with sodium aluminum tetrahydride or potassium aluminum tetrahydride do not complex with the preferred polyether reaction mediums and are therefore more easily separated from the medium. By comparison, the counter-part chloride by-products are soluble in the preferred polyether medium and form stable complexes from which solvent recovery is difficult making the overall reaction less economical and less practical. While the fluorides sometimes form a viscous slurry, they are, nevertheless, ordinarily filterable for solvent recovery. The solubility of sodium aluminum tetrafluoride, for example, has been measured at 0.55 weight percent in diglyme at room temperature, whereas the solubility of sodium aluminum tetrachloride has been measured at about 30 percent in diglyme at room temperature.

The invention uses complex metal hydrides for reaction with silicon tetrafluoride. The complex metal hydrides of the invention include sodium aluminum tetrahydride and potassium aluminum tetrahydride. Alkaline earth metal aluminum tetrahydrides, such as magnesium aluminum tetrahydride $Mg(AlH_4)_2$ and calcium aluminum tetrahydride $Ca(AlH_4)_2$ are excluded from the invention. The sodium aluminum tetrahydride is preferred for the invention since it is more easily prepared and handled, is relatively stable, and forms by-products which are generally insoluble in favored liquid reaction mediums.

The process of the invention is preferably carried out in a liquid reaction medium. The liquid mediums of the invention include the polyethers such as the dimethyl ether of diethylene glycol (diglyme), the dimethyl ether of ethylene glycol (monoglyme), the dimethyl ether of triethyl glycol (triglyme), the dimethyl ether of tetraethylene glycol (tetraglyme), the dialkoxy-1,4-dioxane, and 1,3-dioxolanes, tetrahydrofuran (THF), hydrocarbons including toluene and xylene; simple aliphatic and aromatic ethers including diethyl ether and diphenyl ether, and tertiary amines including triethylamine, tributylamine, and N-methylpyrrolidine.

Liquid reaction mediums outside the preferred class of polyethers are also generally somewhat water-miscible. The hydrocarbon mediums provide low to moderate yields of silane unless strong agitation, such as a ball mill reactor, is used.

The preferred liquid reaction mediums are the polyethers. These include 1,4-dioxane, 1,3-dioxolane, the diethyl ether of ethylene glycol, the dimethyl ether of ethylene glycol, the dimethyl ether of propylene glycol, the dimethyl ether of diethylene glycol, and the like.

A more preferred class of liquid reaction mediums are the lower dialkyl ethers of alkylene glycols. These include the diethyl ether of ethylene glycol, the dimethyl ether of propylene glycol, the dimethylene ether of diethylene glycol, and the like.

Still more preferred are the lower dialkyl ethers of ethylene glycols. These include the dimethyl ether of ethylene glycol, the dimethyl ether of diethylene glycol, the dimethyl ether of triethylene glycol, the diethyl ether of diethylene glycol, and the like.

The most preferred medium is the dimethyl ether of diethylene glycol (diglyme). The preferred solvents of the invention are those which provide reasonable solubility for reactant sodium aluminum tetrahydride or potassium aluminum tetrahydride.

It is preferable to carry out the reaction with a stoichiometric excess of the tetrahydrides of the invention, preferably an excess of sodium aluminum tetrahydride. The reactant silicon tetrafluoride often contains boron impurities which detract from the value of the silane when used for the production of ultrapure silicon. The excess tetrahydride reactant ties up the boron contaminants within the liquid reaction medium.

The concentration of tetrahydride in liquid reaction medium is preferably at least about two percent by weight of the liquid reaction medium in a batch process. Lower concentrations are uneconomical and contribute to problems in the recovery of by-products and reaction medium. Concentrations as low as one percent by weight tetrahydride of reaction medium are commercially impractical in a batch process. Also, too large an amount of reaction medium requires unnecessarily high agitation power requirements.

The preferred reactant, sodium aluminum tetrahydride, is preferably introduced as a solution in a polyether reaction medium and gaseous silicon tetrafluoride is added thereto for synthesis of silane.

The inventive process may be carried out over a broad range of temperatures. For example, silicon tetrafluoride may be metered as a gas and condensed into a reaction zone where it is frozen to a solid. Thereafter, as the temperature of the system is raised, the silicon tetrafluoride begins to react with reactant sodium aluminum tetrahydride, potassium aluminum tetrahydride, or mixture of sodium aluminum tetrahydride and potassium aluminum tetrahydride. The silicon tetrafluoride may be frozen with liquid nitrogen at about −196°C.

A suitable reaction temperature range extends up to the temperature where cleavage of the liquid reaction medium occurs and other reactions may then interfere with the invention. An applicable reaction temperature range extends up to about 160°C. A preferred range for ether reaction mediums is 0 to 80°C. A more preferred range, especially for those reactions of the invention using ether-type liquid reaction mediums is 40 to 70°C. The most preferred reaction temperature range is 50—60°C.

The process of the invention may be conducted at, above, or below atmospheric pressure, but pressure does not strongly affect the reactivity of silicon tetrafluoride with sodium aluminum tetrahydride, potassium aluminum tetrahydride, or a mixture of sodium aluminum tetrahydride and potassium aluminum tetrahydride. A suitable range of reaction pressures is 101 to 10100 kPa. A preferred range is about 101 to 4040 kPa. Notably, the solubility of silicon tetrafluoride is about 0.75 percent in dyglyme at atmospheric pressure and is about five percent in diglyme at 3450 kPa gauge pressure.

The reaction may be carried out under an inert atmosphere. Conveniently, a silane atmosphere, optionally with a hydrogen sweep, is maintained as the product is evolved above a reaction zone, preferably in a liquid reaction medium. Argon, helium, nitrogen, and other inert gases may also be used.

The inventive process is preferably carried out with mechanical or other agitation. Agitation is improved above 50°C in diglyme where the slurry viscosity decreases markedly.

The reaction is almost instantaneous at most reaction conditions. Where silicon tetrafluoride gas is bubbled into a liquid reaction medium, pure silane gas is readily evolved.

The reaction may be carried out without a liquid reaction mixture where silicon tetrafluoride is provided to the tetrahydride in an agitated reaction vessel such as a ball mill reactor. The ball mill reactor and similar apparatus are also preferred for certain reaction mediums such as hydrocarbons. A high shear agitation effects better reaction when such mediums are used.

Since the reaction is somewhat exothermic, evolved heat may be removed by circulating the reactants/reaction slurry through an external heat exchanger or using an internal cooling coil.

A preferred embodiment of the invention is the continuous feed of silicon tetrafluoride gas and sodium aluminum tetrahydride dissolved in diglyme. This embodiment includes operation of the reaction in a continuous back-mixed reactor, operated at conditions approaching completion of the reaction. Once the molar concentration of the by-product solids in the slurry of the reaction zone exceeds the molar amount of tetrahydride reactant, the consistency of the slurry goes from a high viscosity (thick) to a moderate viscosity (thin). This is favorable to mass transfer of the gaseous silicon tetrafluoride to the liquid slurry and therefore, a more complete and rapid reaction results.

Contrary to the batch process of the invention, the concentration of tetrahydride in the liquid reaction medium may well, and preferably does, fall below two percent by weight of the reaction medium in a continuous process. The advantages of the continuous process override any problems mentioned above with respect to the batch process.

The following examples further serve to illustrate the invention.

Example 1

To a 50 mL three-necked, round bottom reaction flask was added 10 millimoles of sodium aluminum tetrahydride (NaAlH$_4$) as a 4% solution in diglyme. The flask was connected to a gas collection train and purged with prepurified hydrogen. A one-eighth inch diameter polytetrafluoroethylene tube was connected to a reservoir of silicon tetrafluoride gas with one end extending into the flask below the surface of the sodium aluminum tetrahydride/diglyme solution. A condenser following the reactor was cooled with a mixture of dry ice and acetone and a product trap was chilled in liquid nitrogen. Magnetic stirring was started and silicon tetrafluoride was bled in beneath the surface of the solution at a feed rate of 10 millimoles over a thirty minute period. The temperature of the diglyme solution of sodium aluminum tetrahydride was 50°C when the silicon tetrafluoride feed was started and gradually rose to a final temperature of 60°C. After the addition of about 10 millimoles silicon tetrafluoride, the reactor and collection system were swept with hydrogen for an additional 30 minutes. The valve between the condenser and the product trap was blocked and the trap and collection system were evacuated. The calibrated section was isolated and the condensed product was permitted to vaporized into it. The amount of gaseous product was calculated by means of the ideal gas law based upon observed initial and final pressures. A sample was analyzed by mass spectrometry and the yield of silane was 99 percent based on sodium aluminum tetrahydride charged.

Example 2

The general procedure of Example 1 was followed except that the reaction was conducted at 60—70°C. The silane yield on sodium aluminum tetrahydride was 90 percent.

Example 3

The general procedure of Example 1 was followed except that the reaction was conducted at 55°C and 207 kPa gauge pressure. Also, a slight stoichiometric excess (1.0:0.97) of silicon tetrafluoride was used. The yield after one hour was 96 percent and the product silane contained some silicon tetrafluoride gas.

Example 4

The same general procedure of Example 1 was followed except that the reaction was conducted at 50°C and 414 kPa gauge. The yield was 80 percent and the product silane contained some silicon tetrafluoride.

Example 5

The same general procedure of Example 1 was followed except that the reaction was conducted at 50°C and 365 kPa gauge. Also, a stoichiometric excess (1.0:1.2) of sodium aluminum tetrahydride was used. The yield was 96 percent silane, free of silicon tetrafluoride.

Example 6

The same general procedure of Example 1 was followed. However, the sodium aluminum tetrahydride was supplied as a six percent solution in diglyme and the reaction was conducted at 50°C and 414 kPa gauge. Also, a stoichiometric excess (1.0:1.2) of sodium aluminum tetrahydride was again employed. After two hours, the 97 percent yield of silane was again free of silicon tetrafluoride.

Example 7

The general procedure of Example 1 was followed. However, the sodium aluminum tetrahydride was supplied as a five percent solution and the silicon tetrafluoride was fed above the surface of the liquid reaction medium. A stoichiometric excess (1.0:0.91) of silicon tetrafluoride was reacted at 50°C and atmospheric pressure. The yield of silane after two hours was 98 percent.

Example 8

The same general procedure was followed as in Example 1 except that the liquid reaction medium also contained some tetrahydrofuran and the reaction was conducted at 25—50°C. The yield of silane was 86 percent.

Example 9

The same general procedure of Example 1 was followed except that the sodium aluminum tetrahydride was recrystallized prior to use. The reaction at 55°C and 228 kPa gauge provided a silane yield of 86 percent after one hour.

Example 10

The same general procedure of Example 1 was followed. A stoichiometric excess (1.0:1.3) of recrystallized sodium aluminum tetrahydride was employed in a 4.5 percent solution of dimethoxyethane at 23°C and atmospheric pressure. The silane yield after one hour was 84 percent.

It is possible to conduct the inventive process with the introduction of seed materials into the reaction zone. The seed materials include MgO, $Na_2SiF_6$, $CaCO_3$, KF, and others. Also, some runs were made under similar conditions to those in the examples above with similarly good results.

Examples 11 and 12 demonstrate the addition of seed materials to the reaction mixture.

Example 11

The same general procedure of Example 1 was followed except that about 20 millimoles MgO was also put into the reaction mixture with the sodium aluminum tetrahydrides. The silane yield was high and the byproduct slurry was more quickly filtered than the slurry from the Examples above.

Example 12

The same general procedure of Example 1 was followed except that 4 millimoles sodium fluosilicate ($Na_2SiF_6$) were added to the reaction mixture. The yield of silane was 94 percent and the nature of the by-product solids was changed.

Some experiments with methyl *tert*-butyl ether, diphenyl ether, and toluene reaction mediums provided low yields (less than 10%, 5%, and less than 1%, respectively) of silane, but use of high shear agitation apparatus with reaction mixtures employing these liquid mediums would increase the yield.

**Claims**

1. A process for the production of silane characterized in that silicon tetrafluoride is reacted exclusively with sodium aluminum tetrahydride, potassium aluminum tetrahydride, or a mixture of sodium aluminum tetrahydride and potassium aluminum tetrahydride.

2. The process as claimed in Claim 1 in which the silicon tetrafluoride is introduced into the reaction zone in gaseous form.

3. The process as claimed in Claim 1 in which the reaction is conducted in an inert liquid reaction medium.

4. The process of claim 3, wherein said reaction medium comprises a polyether.

5. The process as claimed in Claim 4, in which said polyether is a lower dialkyl ether of an alkylene glycol.

6. The process as claimed in Claim 4 in which said polyether is the dimethyl ether of diethylene glycol.

7. The process as claimed in Claim 4 in which said polyether is the dimethyl ether of ethylene glycol.

8. The process as claimed in Claim 1 in which the reaction is conducted with agitation in an inert liquid reaction medium under an atmosphere of hydrogen or silane, or both.

9. The process as claimed in Claim 1 in which silicon tetrafluoride is reacted exclusively with sodium aluminum tetrahydride.

10. The process as claimed in Claim 9 in which gaseous silicon tetrafluoride is introduced into an inert liquid reaction medium containing sodium aluminum tetrahydride and the reaction medium is maintained at a temperature in the range of from 30 to 80 degrees Centigrade.

11. The process as claimed in Claim 10 in which the silicon tetrafluoride and the sodium aluminum tetrahydride are proportioned such that throughout substantially the entire reaction period the amount of the sodium aluminum tetrahydride is in excess of the stoichiometric amount of the silicon tetrafluoride employed.

12. The process as claimed in Claim 10 in which said reaction is carried out at a temperature in the range of from 50 to 60 degrees Centigrade and a pressure in the range of from 101 to 10100 kPa.

13. The process as claimed in Claim 10 in which said gaseous silicon tetrafluoride is introduced into an agitated, inert liquid polyether reaction medium containing sodium aluminum tetrahydride, the reaction mixture being maintained (i) at a temperature in the range of from 30 to 80 degrees Centigrade, (ii) at a pressure in the range of from 101 to 10100 kPa, and (iii) under an atmosphere of hydrogen, silane or both.

**Patentansprüche**

1. Verfahren zum Erzeugen von Silan, dadurch gekennzeichnet, daß Siliciumtetrafluorid ausschließlich mit Natriumaluminiumtetrahydrid, Kaliumaluminiumtetrahydrid oder einem Gemisch von Natriumaluminiumtetrahydrid und Kaliumaluminiumtetrahydrid umgesetzt wird.

2. Verfahren nach Anspruch 1, dadurch gekennzeichnet, daß das Siliciumtetrafluorid in Gasform in die Reaktionszone eingebracht wird.

3. Verfahren nach Anspruch 1, dadurch gekennzeichnet, daß die Reaktion in einem inerten flüssigen Reaktionsmedium durchgeführt wird.

4. Verfahren nach Anspruch 3, dadurch gekennzeichnet, daß das Reaktionsmedium wenigstens teilweise aus einem Polyether besteht.

5. Verfahren nach Anspruch 4, dadurch gekennzeichnet, daß der Polyether ein niederer Dialkylether eines Alkylenglykols ist.

6. Verfahren nach Anspruch 4, dadurch gekennzeichnet, daß der Polyether der Dimethylether das Diethylenglykols ist.

7. Verfahren nach Anspruch 4, dadurch gekennzeichnet, daß der Polyether der Dimethylether des Ethylenglykols ist.

8. Verfahren nach Anspruch 1, dadurch gekennzeichnet, daß die Reaktion unter Bewegung in einem inerten flüssigen Reaktionsmedium unter einer Atmosphäre aus Wasserstoff und/oder Silan durchgeführt wird.

9. Verfahren nach Anspruch 1, dadurch gekennzeichnet, daß Siliciumtetrafluorid ausschließlich mit Natriumtetrahydrid umgesetzt wird.

10. Verfahren nach Anspruch 9, dadurch gekennzeichnet, daß gasförmiges Siliciumtetrafluorid in ein inertes flüssiges Reaktionsmedium eingeleitet wird, das Natriumaluminiumtetrahydrid enthält und das auf einer Temperatur im Bereich von 30 bis 80°C gehalten wird.

11. Verfahren nach Anspruch 10, dadurch gekennzeichnet, daß die Mengen des Siliciumtetrafluorid und des Natriumaluminiumtetrahydrid relativ zu einander so bemessen werden, daß im wesentlichen während der ganzen Reaktionszeit die Menge des Natriumaluminiumtetrahydrid größer ist als die stöchiometrische Menge, die der Menge des Siliciumtetrafluorids entspricht.

12. Verfahren nach Anspruch 10, dadurch gekennzeichnet, daß die Reaktion bei einer Temperatur im Bereich von 50 bis 60°C und unter einem Druck in dem Bereich von 101 bis 10 100 kPa durchgeführt wird.

13. Verfahren nach Anspruch 10, dadurch gekennzeichnet, daß das gasförmige Siliciumtetrafluorid in ein bewegtes inertes flüssiges Reaktionsmedium eingeleitet wird, das mindestens teilweise aus Polyether besteht und Natriumaluminiumtetrahydrid enthält, und daß das Reaktionsgemisch (i) auf einer Temperatur im Bereich von 30 bis 80°C, (ii) unter einem Druck im Bereich von 101 bis 10 100 kPa und (iii) unter einer Atmosphäre aus Wasserstoff und/oder Silan gehalten wird.

**Revendications**

1. Procédé de préparation du silane, caractérisé par le fait qu'on fait réagir du tétrafluorure de silicium exclusivement avec de tétrahydrure de sodium et d'aluminium, du tétrahydrure de potassium et d'aluminium ou avec un mélange de tétrahydrure de sodium et d'aluminium et de tétrahydrure de potassium et d'aluminium.

2. Procédé selon la revendication 1, caractérisé par le fait que le tétrafluorure de silicium est introduit dans la zone réactionnelle sous forme gazeuse.

3. Procédé selon la revendication 1, caractérisé par le fait que la réaction est effectuée dans un milieu réactionnel liquide inerte.

4. Procédé selon la revendication 3, caractérisé par le fait que ce milieu réactionnel comprend un polyéther.

5. Procédé selon la revendication 4, caractérisé par le fait que ce polyéther est un éther dialkylique inférieur d'un alkylène glycol.

6. Procédé selon la revendication 4, caractérisé par le fait que ce polyéther est l'éther diméthylique du diéthylène glycol.

7. Procédé selon la revendication 4, caractérisé par le fait que ce polyéther est l'éther diméthylique de l'éthylène glycol.

8. Procédé selon la revendication 1, caractérisé par le fait que la réaction est effectuée avec agitation dans un milieu réactionnel liquide inerte, sous atmosphère d'hydrogène ou de silane, ou des deux.

9. Procédé selon la revendication 1, caractérisé par le fait quie le tétrafluorure de silicium est mis à réagir exclusivement avec du tétrahydrure de sodium et d'aluminium.

10. Procédé selon la revendication 9, caractérisé par le fait que du tétrafluorure de silicium gazeux est introduit dans un milieu réactionnel liquide inerte contenant du tétrahydrure de sodium et d'aluminium et dans lequel le milieu réactionnel est maintenu à une température dans l'intervalle de 30 à 80°C.

11. Procédé selon la revendication 10, caractérisé par le fait que le tétrafluorure de silicium et le tétrahydrure de sodium et d'aluminium sont dans des proportions telles que tout au long de la quasi-totalité de la durée de la réaction, la quantité du tétrahydrure de sodium et d'aluminium est en excès par rapport à la quantité stoichiométrique du tétrafluorure d'aluminium utilisée.

12. Procédé selon la revendication 10, caractérisé par le fait que cette réaction est effectuée à une température dans l'intervalle de 50 à 60°C et sous une pression dans l'intervalle de 101 à 10100 kPa.

13. Procédé selon la revendication 10, caractérisé par le fait que ce tétrafluorure de silicium gazeux est introduit dans un milieu réactionnel de polyéther liquide inerte agité contenant du tétrahydrure de sodium et d'aluminium, le mélange réactionnel étant maintenu (i) à une température dans l'intervalle de 30 à 80°C, (ii) à une pression dans l'intervalle de 101 à 10100 kPa, et (iii) sous une atmosphère d'hydrogène, de silane ou des deux.